Europäisches Patentamt

European Patent Office

Office européen des brevets

Veröffentlichungsnummer: **0 283 553**
**A1**

# EUROPÄISCHE PATENTANMELDUNG

Anmeldenummer: 87113612.3

Anmeldetag: 17.09.87

Int. Cl.⁴ **B23Q 1/02** , B23Q 9.00 , B23Q 3/00

Priorität: 29.01.87 DE 3702596
21.02.87 DE 3705583

Veröffentlichungstag der Anmeldung:
28.09.88 Patentblatt 88/39

Benannte Vertragsstaaten:
AT BE CH DE ES FR GB GR IT LI LU NL SE

Anmelder: **Festo KG**
**Ulmer Strasse 48**
**D-7300 Esslingen a.N.(DE)**

Erfinder: **Maier, Peter**
**Gerockstr. 1**
**D-7311 Neidlingen(DE)**
Erfinder: **Sigel, Albert**
**Scholderplatz 21**
**D-7315 Weilheim(DE)**
Erfinder: **Attinger, Karl**
**Seestr. 21**
**D-7311 Holzmaden(DE)**
Erfinder: **Arnold, Günter**
**Albstr. 5**
**D-7441 Kohlberg(DE)**

Vertreter: **Patentanwälte Dipl.-Ing. W.**
**Scherrmann Dr.-Ing. R. Rüger**
**Webergasse 3 Postfach 348**
**D-7300 Esslingen (Neckar)(DE)**

## Bearbeitungstisch.

Ein Bearbeitungstisch (1) für mittels eines Handwerkzeugs, wie einer Handkreissäge (3), zu bearbeitende Werkstücke (2) enthält eine rechteckige Tischplatte (6), deren Tischfläche (7) eine Auflagefläche für das Werkstück (2) bildet. Über die Auflagefläche erstreckt sich eine Führungsschiene(8), die mittels im Bereich der Seitenfläche an der Tischplatte (6) befestigter Stützeinrichtungen mit Abstand über der Tischfläche (7) gehalten ist. Außerdem ist ein an der Tischplatte (6) gehalterter und um eine zu der Tischfläche (7) senkrechte Achse schwenkbarer Winkelanschlag (5) vorgesehen, der eine Anschlagfläche für das Werkstück (2) aufweist. Eine der Stützeinrichtungen enthält ein Scharnier, dessen Achse parallel zu der Tischfläche (7) verläuft, wodurch die Führungsschiene (8) - schwenkbar mit der Tischplatte (6) verbunden ist. Die andere Stützeinrichtung dient als loses Auflager.

Beide Stützeinrichtungen sind in der Höhe verstellbar, um den Abstand der Führungsschiene (8) von der Tischfläche (7) an die Werkstückdicke anzupassen.

Fig. 1

## Bearbeitungstisch

Die Erfindung geht aus von einem Bearbeitungstisch mit den Merkmalen des Oberbegriffs des Anspruches 1.

Aus der US-PS 4 007 657 ist eingattungsgemäßer Sägetisch bekannt, der etwa in der Mitte eine längliche, sich jedoch nicht über die gesamte Auflagefläche erstreckende nutenförmige Ausnehmung aufweist, deren Querschnitt etwa die Gestalt eines Kreissegmentes hat. Die Führung der Handkreissäge erfolgt mittels zweier Schienen, die beidseitig der Ausnehmung auf der Tischfläche brückenartig aufgebockt sowie endseitig mit insgesamt vier Pfeilern mit der Tischfläche starr und unverstellbar verbunden sind. An einer Schmalseite des Sägetisches befinden sich außerhalb der Schienen zwei um eine zu der Tischfläche senkrechte Achse schwenkbare Anschläge für das Werkstück, deren Anschlagflächen gegenüber den benachbarten Pfeilern vorspringen.

Bei dem bekannten Sägetisch wird das abzulängende Werkstück unter die beiden parallel mit Abstand zueinander verlaufenden Führungsschienen eingeschoben und an wenigstens einem der Anschläge zur Anlage gebracht. Die auf den beiden Führungsschienen geführte Handkreissäge schneidet beim Vorschieben längs der Führungsschienen das Werkstück durch, wobei das Sägeblatt durch die Nut läuft.

Aufgrund der völlig starren Befestigung der Führungsschienen an dem Sägetisch können nur Werkstücke bearbeitet werden, deren Abmessungen parallel zu dem auszuführenden Sägeschnitt kleiner als die lichte Weite zwischen den Pfeilern einer Schiene ist.

Die starre Befestigung der Führungsschienen bedingt ferner eine umständliche Handhabung insofern, als das zu bearbeitende Werkstück immer von der Seite her in den Spalt zwischen den Führungsschienen und der Tischfläche eingeschoben werden muß. Soweit es sich um kurze Werkstücke handelt, ist dies noch tragbar. Werden die Werkstücke länger, wird die Handhabung - schwierig.

Darüber hinaus ist der Sägetisch auch vom Arbeitsschutz her ungünstig, weil das Werkstück mit vertikalem Spiel unter den Führungsschienen liegt und das schneidende Sägeblatt von unten nach oben durch das Werkstück hindurchläuft, wobei naturgemäß eine Tendenz besteht, das Werkstück von der Unterlage nach oben gegen die Führungsschienen zu reißen. Sobald geringfügige Verkantungen des Sägeblattes im Werkstück auftreten, ist ein schlagartiges Hochreißen des Werkstücks die zwangsläufige Folge, weil in aller Regel die Werkstückabschnitte zu beiden Seiten des auszuführenden Sägeschnittes ungleich groß sind und die dadurch resultierende Gewichtsverteilung die Verkantung begünstigt. Hat nämlich das Sägeblatt einmal gefangen, wird das Werkstück mit dem kleineren Abschnitt hochgerissen, so daß sich die Verklemmung am Sägeblatt verstärkt. Derartige Situationen sind stark unfallträchtig, weil unkontrolliert Zähne des Sägeblattes ausbrechen können oder Werkstücksplitter ungehindert wegfliegen.

Der wegen der festen Anordnung der Führungsschienen notwendigerweise häufig auftretende Spalt zwischen der Werkstückoberseite und den Führungsschienen bedingt eine weitere unfallträchtige Situation, weil der Handwerker versehentlich in den Spalt zwischen Werkstück und Führungsschiene greifen kann und damit in den Bereich des Sägeblattes kommt. Diese Gefahr steigt, wenn kleine Werkstücke bearbeitet werden und der Handwerker bestrebt ist, diese möglichst dicht neben dem Sägeblatt zu halten.

Schließlich ist es schwierig, das Werkstück zwischen den Führungsschienen so zu positionieren, daß tatsächlich entlang dem Anriß gesägt wird, weil in unmittelbarer Nähe des Anrisses keine Bezugskante vorhanden ist. Die benachbarten Innenkanten der Innenschienen befinden sich in einem mehr oder weniger großen Abstand über der Oberseite des zu bearbeitenden Werkstückes und sind demgegenüber seitlich versetzt. Die Lage des Sägeschnittes wird deswegen häufig ein Zufallsergebnis sein.

Wegen der Anordnung der Anschläge seitlich neben den Führungsschienen werden hierdurch die kleinsten zu bearbeitenden Längen auf den beträchtlichen Abstand festgelegt, den das Sägeblatt von dem Anschlag aufweist.

Bei einem anderen aus der DE-OS 35 25 959 bekannten Sägetisch erfolgt die Führung der Handkreissäge mit Hilfe lediglich einer einzigen Führungsschiene, die platten-oder brettförmige Gestalt hat, wobei dessen Oberseite die Handkreissäge beim Sägeschnitt trägt und eine an der Oberseite vorspringende Führungsrippe den geraden Lauf der Handkreissäge sicherstellt. Der Abstand der Führungsrippe von einer Längskante der Führungsschiene entspricht dem Abstand von der Führungseinrichtung an der Handkreissäge bis zum Sägeblatt, damit bei der Handhabung das Sägeblatt in unmittelbarer Nähe der Führungsschiene verläuft.

In der Oberseite des Sägetisches ist wenigstens eine Nut mit Rechteckquerschnitt vorgesehen, die von Kante zu Kante verläuft.

Bei der Verwendung des bekannten Sägetisches wird das Werkstück mit dem Anriß, längs dem zu schneiden ist, über die Nut gelegt und mit einer Schmalseite am neben der Nut befindlichen Winkelanschlag zur Anlage gebracht. Die Führungsschiene wird dann auf das Werkstück aufgelegt, wobei die Längskante der Führungsschiene die Bezugskante darstellt, die den Weg des Sägeblattes beim Schnitt kennzeichnet. Die Führungsschiene wird deswegen mit dieser Bezugskante unmittelbar am Anriß angelegt. Damit die Führungsschiene nicht in Längsrichtung verschoben wird, wenn die Handkreissäge über die Führungsschiene gleitet, ist an der Unterseite der Führungsschiene ein zweiter Winkelanschlag vorgesehen, der mit der anderen Schmalseite des Werkstücks in Anlage gebracht wird. Das Werkstück ist so längs aller seiner Seiten, die an den auszuführenden Sägeschnitt angrenzen, von Teilen der Führungsschiene bzw. des Sägetisches umgeben und selbst ein sich verklemmendes Sägeblatt kann das Werkstück nicht hochreißen, da es bereits an der Unterseite der Führungsschiene anliegt. Diese Konstruktion ist deswegen wesentlich weniger unfallträchtig. Außerdem ist das Kreissägeblatt während des Schnitts allseitig unzugänglich.

Bei der losen Führungsschiene ergeben sich allerdings Probleme, wenn Werkstücke bearbeitet werden sollen, die in Richtung des Sägeschnittes verhältnismäßig geringe Abmessungen aufweisen, weil dann die Führungsschiene auf dem Werkstück zum Kippen neigt, was sich nur dadurch verhindern läßt, daß an dem anderen Ende der Führungsschiene ein Stück Abfallholz untergelegt wird, das dieselbe Dicke aufweist wie das Werkstück selbst. Außerdem muß bei der bekannten Anordnung der an der Führungsschiene vorgesehene Winkelanschlag mit verstellt werden, wenn unterschiedlich breite Werkstücke verarbeitet werden, weil einst entweder nicht die oben erläuterte allseitige Einspannung des Werkstückes gewährleistet ist oder die Führungsschiene zu weit über das Werkstück hinausragt und beim Loslassen herunterkippt.

Ausgehend hiervon ist es Aufgabe der Erfindung, einen leicht und unfallfrei zu handhabenden Bearbeitungstisch zu schaffen, mit dem ohne Veränderung von Einstellungen unterschiedlich breite Werkstücke bis hin zu Leisten verarbeitet werden können, ohne daß zusätzliche Hilfseinrichtungen erforderlich sind.

Erfindungsgemäß wird diese Aufgabe durch den Bearbeitungstisch mit den Merkmalen des Anspruches 1 gelöst.

Infolge der höhenverstellbaren Stützeinrichtugen läßt sich die Höhe der Führungsschiene über der Tischfläche leicht auf die Dicke des zu bearbeitenden Werkstückes einstellen, und zwar so, daß wiederum die Führungsschiene, die bei der Handhabung die Handkreissäge, Oberfräse od.dgl. trägt und führt, unmittelbar auf der Oberseite des Werkstückes aufliegt. Die Kante der Führungsschiene läßt sich dann wiederum als Bezugskante verwenden, um paralaxenfrei das Werkstück mit dem Anriß gegenüber der Führungsschiene auszurichten.

Da die Stützeinrichtungen, die im Bereich der Seitenflächen der Tischfläche angeordnet sind, einen erheblichen Abstand voneinander haben, können ohne Veränderung der Einstellung sehr schmale und sehr breite Werkstücke bearbeitet werden, sofern sie nahezu gleiche Dicke aufweisen. Das Scharnier an einer Stützeinrichtung erleichtert dabei das Einlegen des Werkstückes, denn es kann zu diesem Zweck die Führungsschiene unverlierbar hochgeklappt oder zur Seite geschwenkt werden, je nachdem, wie die Scharnierachse verläuft. Die horizontal verlaufende Scharnierachse hat dabei den Vorteil, die Höheneinstellung der Stützeinrichtung zu erleichtern insofern, als bei gelöster Stützeinrichtung diese selbsttätig in die richtige Höhe über der Tischfläche gezogen oder geschoben wird, wenn die Führungsschiene auf die Dicke eines anderen Werkstückes eingestellt werden soll. Hierbei werden keine unzulässigen Biegemomente in der Führungsschiene oder der Stützeinrichtung erzeugt. Wenn dagegen die Scharnierachse vertikal, also senkrecht zur Tischfläche verläuft, können ohne weiteres lange Bretter oder Paneelbretter auf Gehrung geschnitten werden, wobei die Bretter immer parallel zu einer der Tischkanten verlaufend aufgelegt werden. Eventuell ist es auch zweckmäßig, zwischen der Stützeinrichtung und der Führungsschiene eine Gelenkverbindung vorzusehen, die entsprechend einer horizontalen und einer vertikalen Schwenkachse die beiden Freiheitsgrade aufweist.

Geringe Dickenunterschiede bei den Werkstücken, die beispielsweise bei Holzwerkstoff unvermeidbar sind, lassen sich ausgleichen, wenn die Unterseite der Führungsschiene mit einem elastischen Belag, beispielsweise Schaumstoffstreifen, versehen ist.

Wenn nach dem Sägeschnitt zwei Werkstückteile anfallen, die stark unterschiedliche Größe haben und deren Schwerpunkt noch auf der Tischfläche liegen soll, damit sie nicht herunterkippen, ist es von Vorteil, wenn die Stützeinrichtungen in Richtung parallel zu wenigstens zwei einander gegenüberliegenden Seitenflächen verstellbar sind. Sehr einfach wird dabei die Handhabung, wenn jeder Stützeinrichtung ein Parallelführungsglied zugeordnet ist, das Parallelführungsflächen trägt, die mit entsprechenden Parallelführungsflächen an den Stützeinrichtungen zusammenwirken. Ohne Höhenverstellung der Stützeinrichtungen lassen sich diese dann längs der Seitenfläche des Tisches verschieben.

Eine einfach herzustellende Klemmeinrichtung zum Arretieren der Stützeinrichtung an dem Parallelführungsglied besteht in der Verwendung von einer oder zwei Kopfschrauben, die formschlüsig in dem Parallelführungsglied gehalten sind und mit ihrem Gewindeschaft durch zugehörige Langlöcher in den jeweiligen Stützeinrichtungen hindurchführen. Auf das aus der Stützeinrichtung herausragende freie Ende des Gewindeschaftes ist eine Mutter aufgeschraubt, die bevorzugt mit einem Betätigungsglied versehen ist, damit ohne Zuhilfenahme von Werkzeugen die Schraubverbindung gelockert bzw. angezogen werden kann.

Hinsichtlich der Passung der Parallelführungsflächen zueinander sind die Herstellungsanforderungen geringer, wenn die Parallelführungsflächen jeder Stützeinrichtung begrenzt nachgiebig ausgebildet sind, so daß bei einem Übermaß des Parallelführungsgliedes die Führungsflächen der Stützeinrichtung ausweichen können, wenn die Klemmeinrichtung angezogen wird. Auf diese Weise wird auch im gelockerten Zustand eine weitgehend spielfreie Führung in Verstellrichtung erreicht.

Eine sehr einfach herzustellende Stützeinrichtung besteht aus einem Blechformteil, das eine etwa rechteckige Grundplatte aufweist, an der an zwei zueinander parallelen Seiten die Parallelführungsflächen in Gestalt von Flanschen angeformt sind, die in einer zu der Grundplatte parallelen Richtung zueinander parallel und in einer auf der Grundplatte senkrecht stehenden Richtung von dieser ausgehend divergieren. Oberhalb der Parallelführungsflächen, die von den Flanschen gebildet sind, enthält das eine Blechformteil zwei in die andere Richtung, d.h. nach rückwärts abgewinkelte Fortsätze, die den mit der Stützeinrichtung fest verbundenen Teil des Scharniers bilden. Bei der anderen Stützeinrichtung ist oberhalb der Leisten ein Flansch angebogen, der parallel zu der Tischfläche verläuft und die lose Auflage für die Führungsschiene bildet.

Eine einfache und die Bewegung des Werkzeugs, wie Handkreissäge, Oberfräse u.dgl. auf der Führungsschiene nicht behindernde Verbindung zwischen der Führungsschiene und dem Scharnier besteht darin, daß in der Unterseite der Führungsschiene eine in Richtung auf die Unterseite offene T-Nut eingeformt ist, in der eine als Nutenstein ausgebildete Mutter sitzt. In diesen Nutenstein werden ein oder zwei Schrauben eingedreht, die durch den entsprechenden Scharnierteil hindurchführen. Der Verlauf der Führungsschiene wird sehr exakt nach dem Hochschwenken jeweils wieder hergestellt, wenn die Stützeinrichtung, die als loses Auflager dient, einen Indexbolzen trägt, der in die T-Nut möglichst spielfrei eingreift. Wenn bei der Handhabung selbst große Querkräfte parallel zur Tischfläche auf die Führungsschiene einwirken, läßt sie sich nicht aus ihrer Winkellage herausdrücken, so daß der Schnittwinkel jeweils exakt eingehalten wird.

Da bei dem neuen Bearbeitungstisch das Sägeblatt in die Tischfläche einschneidet, wenn der Sägeschnitt ausgeführt wird, ist es vorteilhaft, wenn die Tischplatte einen aus im Querschnitt etwa rechteckigen Profilrohren gebildeten Rahmen aufweist, der die Seitenflächen trägt und in den eine die Tischfläche bildende Platte aus Holz oder Holzwerkstoff eingelegt ist, wobei die Tischfläche mit Abstand über der Oberkante des Rahmens verläuft. Auf diese Weise kann die eigentliche Tischfläche leicht ausgetauscht werden, wenn sie infolge einer Vielzahl von Sägeschnitten auf der Oberseite zu stark uneben geworden ist. Andererseits hat aber das Einschneiden des Sägeblattes in die Tischfläche den großen Vorteil, daß das Werkstück bis an die Schnittfläche heran auf der Tischfläche aufliegt und auch schmale Abschnitte sich nicht zwischen dem Sägeblatt und einer vorgeformten Nut in der Tischfläche verklemmen können.

Die Halterung und Verstellung der einzelnen Elemente, nämlich der Stützeinrichtungen sowie des Winkelanschlages und eines Längsanschlages, wird vereinfacht, wenn in wenigstens einer Seitenfläche, vorzugsweise allen Seitenflächen, T-Nuten ausgebildet sind, die parallel zu dem Umfang der Tischfläche verlaufen. Die T-Nut kann dabei in dem den Rahmen bildenden Profilrohr enthalten sein.

Die T-Nut kann auch gleichzeitig der Führung des Parallelführungsgliedes dienen, das hierzu eine Führungsrippe aufweist, die mit geringem Spiel in den Schlitz der T-Nut hineinragt.

Ein einfach herzustellender und leicht zu handhabender Winkelanschlag, der jederzeit längs der Seitenfläche der Tischplatte verstellbar ist, besteht aus einem Unterteil sowie einem auf dem Unterteil verschwenkbaren und an dem Unterteil mit Klemmitteln arretierbaren Oberteil, das die Anschlagfläche trägt und gegenüber dem Unterteil um die zu der Tischfläche senkrechte Schwenkachse verschwenkbar ist. Zur Anbringung des Winkelanschlages an der Tischplatte enthält das Unterteil eine nach unten abgewinkelte Leiste, mit der es an der Seitenfläche der Tischplatte gehalten ist. Die Grundeinstellung des Winkelanschlags erfolgt hierbei dadurch, daß die Verklemmung zwischen der Führungsschiene und dem daran befestigten Scharnierteil gelöst, die Führungsschiene rechtwinklig zu der Anlagefläche des Winkelanschlages ausgerichtet und anschließend die Verklemmung wieder wirksam gemacht wird.

Durch Umstecken des Winkelanschlages von derjenigen Tischseite, an der das Scharnier gehaltert ist, auf die rechtwinklig dazu verlaufende Außenseite der Tischseite können auch Winkel- bzw. Gehrungsschnitte ausgeführt werden, deren Winkel größer als 45° ist.

Um die Schwenkachse möglichst dicht an die Bezugskante der Führungsschiene heranbringen zu können, damit auch sehr kurze Werkstücke bearbeitbar sind, enthält das Oberteil einen die Anschlagfläche tragenden geraden Schenkel, an dessen einem Ende die Schwenkachse angeordnet ist und an dessen anderem Ende ein kreisbogenförmig verlaufender Schenkel einstückig angeformt ist, dessen außen liegende Umfangsseite einen Kreisausschnitt darstellt, der zu der Schwenkachse konzentrisch ist. Der Winkelanschlag läßt sich so ohne weiteres unter die Führungsschiene einführen, sofern ihre Dicke geringer ist als die Dicke des dünnsten zu bearbeitenden Werkstückes, d.h. vorzugsweise dünner als ca. 10 mm. Bei dieser Ausgestaltung des Winkelanschlages kommt in der 90°-Stellung die Stützeinrichtung der Führungsschiene in dem Winkelbereich zwischen dem geraden und dem gebogenen Schenkel zu liegen.

Zum Klemmen des Oberteils auf dem Unterteil enthält das Oberteil ein kreisbogenförmig verlaufendes Langloch, durch das ein Schraubenschaft hindurchführt, der am Unterteil verankert ist. Mit Hilfe einer Mutter, die wiederum bevorzugt mit einem Betätigungsglied versehen ist, wird das Oberteil auf dem Unterteil verklemmt.

Zur Winkeleinstellung des Winkelanschlages enthält dieser längs der außen liegenden gekrümmten Kante eine Gradeinteilung, die mit einer Indexmarke am Unterteil zusammenwirkt.

Bei einer anderen Ausführungsform des Winkelanschlags enthält das Unterteil einen nach unten in Richtung auf den Rahmen zu gekröpften Ansatz, an dem ein länglicher T-Nutenstein befestigt ist. Durch Lösen der Klemmschrauben, die das Unterteil des Winkelanschlages mit dem T-Nutenstein verbinden, läßt sich der Winkelanschlag in seiner Grundeinstellung rechtwinklig zu der Führungsschiene ausrichten. Eine weitere Klemmschraube ermöglicht die Verstellung des T-Nutensteins in der nach oben offenen T-Nut des Rahmens der Tischplatte. Gegebenenfalls kann an dem Unterteil des Winkelanschlages, und zwar bei jeder Ausführungsform, ein Indexbolzen vorgesehen sein, der mit entsprechenden Indexausnehmungen am Oberteil zusammenwirkt, so daß es leicht möglich ist, das Oberteil in den Standardschnittwinkel zu positionieren, ohne eine Einstellskala zu Hilfe nehmen zu müssen.

Wenn mit dem Bearbeitungstisch eine Vielzahl von Werkstücken mit gleicher Länge herzustellen ist, wird vorzugsweise ein Längsanschlag verwendet, der einen an der Tischplatte zu befestigenden Halter sowie einen eine Anschlagfläche tragenden Stab umfaßt, der längsverschieblich in einer Öffnung des Halters sitzt und mit Hilfe von Klemmmitteln in dem Halter zu arretieren ist. Dieser Längsanschlag kann entweder auf der linken oder auf der rechten Seite neben der Führungsschiene angeordnet werden, wobei die Anschlagfläche möglichst geringe Abmessungen aufweist, damit sie nicht die winkelgerechte Anlage am Winkelanschlag beeinträchtigt.

Der Halter für den Längsanschlag besteht seinerseits wiederum aus einem Scharnier, von dem das eine Teil längsverschieblich an der Tischplatte zu haltern ist, während das andere Teil die Öffnung für den Stab enthält. Die Scharnierachse verläuft außerhalb der Tischfläche und unterhalb einer durch sie definierten Ebene, so daß das obere Scharnierteil samt dem die jeweilige Länge eingestellten Stab von der Tischfläche heruntergeschwenkt werden kann, falls zwischenzeitlich Werkstücke mit anderen Längen zu bearbeiten sind.

Um ein Umschlagen des beweglichen Scharnierteils in der ausgeklappten Stellung zu verhindern, kann diesem beweglichen Scharnierteil ein Anschlag zugeordnet sein, der sich am feststehenden Scharnierteil anlegt, damit in der ausgeklappten Stellung der Stab parallel zu der durch die Tischfläche definierten Ebene verläuft. Mit Hilfe eines auf den Stab aufsitzenden verklemmbaren Reiters läßt sich auf diese Weise der Verstellbereich des Längsanschlages erheblich vergrößern.

In der Zeichnung ist ein Ausführungsbeispiel des Gegenstandes der Erfindung dargestellt. Es zeigen:

Fig. 1 einen Bearbeitungstisch gemäß der Erfindung mit darauf angeordnetem Werkstück sowie einer Handkreissäge, in einer Draufsicht,

Fig. 2 den Bearbeitungstisch nach Fig. 1, geschnitten entlang der Linie II-II nach Fig. 1 in einer Draufsicht,

Fig. 3 die mit dem Scharnier versehene Stützeinrichtung des Bearbeitungstisches nach Fig. 1 sowie das zugehörige Parallelführungsglied in einer perspektivischen Explosionsdarstellung,

Fig. 4 die von dem Richtscheit lose Stützeinrichtung des Bearbeitungstisches nach Fig. 1 in einer perspektivischen Darstellung,

Fig. 5 den Winkelanschlag des Bearbeitungstisches nach Fig. 1 in einer perspektivischen Explosionsdarstellung,

Fig 6 den Winkelanschlag nach Fig. 5, geschnitten entlang einer Linie VI-VI nach Fig. 1 in einer Seitenansicht,

Fig. 7 den Längsanschlag des Bearbeitungstisches nach Fig. 1 in einer perspektivischen Explosionsdarstellung und verkürzt gezeichnetem Stab,

Fig. 8 eine andere Ausführungsform des Winkelanschlages für den Bearbeitungstisch nach Fig. 1 in einer perspektivischen Explosionsdarstellung und

Fig. 9 den Winkelanschlag nach Fig. 8, geschnitten entlang einer Linie IX-IX nach Fig. 8 in einer Seitenansicht.

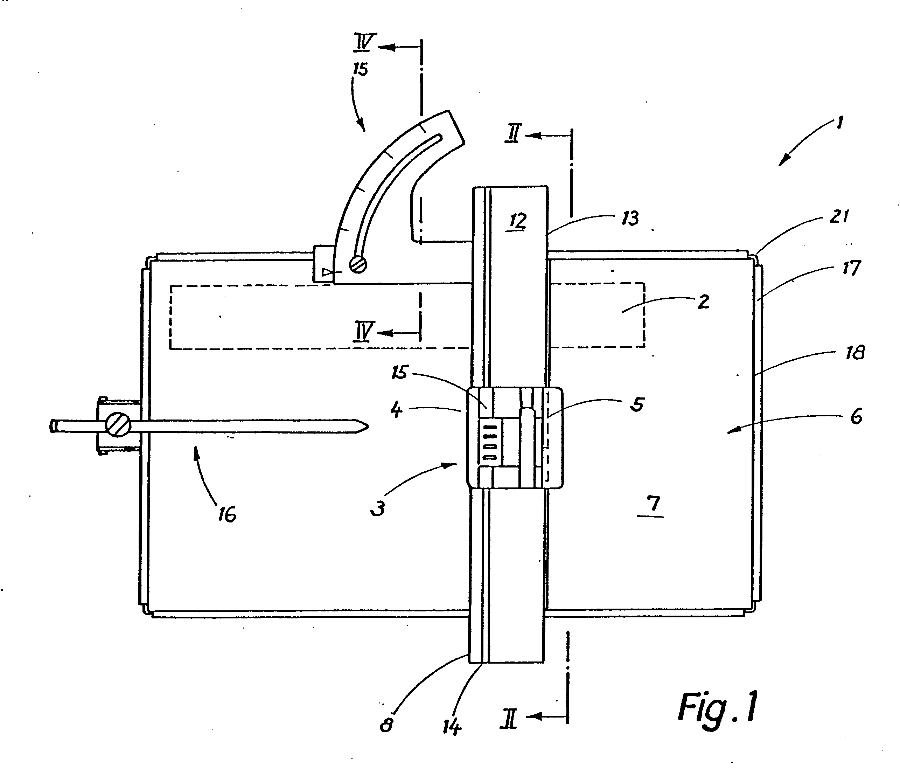

Fig. 1 zeigt in einer Draufsicht einen Bearbeitungstisch 1 für mittels eines kraftgetriebenen Handwerkzeugs zu bearbeitende Werkstücke 2. Als Beispiel für ein solches Handwerkzeug ist in Fig. 1 eine Tauchkreissäge 3 mit einer Fußplatte 4 veranschaulicht, deren Kreissägeblatt 5 gestrichelt gezeigt ist. Das Handwerkzeug kann anstelle der Handkreissäge 3 aber auch eine Oberfräse oder ein ähnliches Werkzeug sein; die Handkreissäge ist beispielhaft.

Der Bearbeitungstisch 1 enthält eine rechteckige Tischplatte 6, deren Tischfläche 7 die Auflagefläche für das Werkstück 2 bildet.

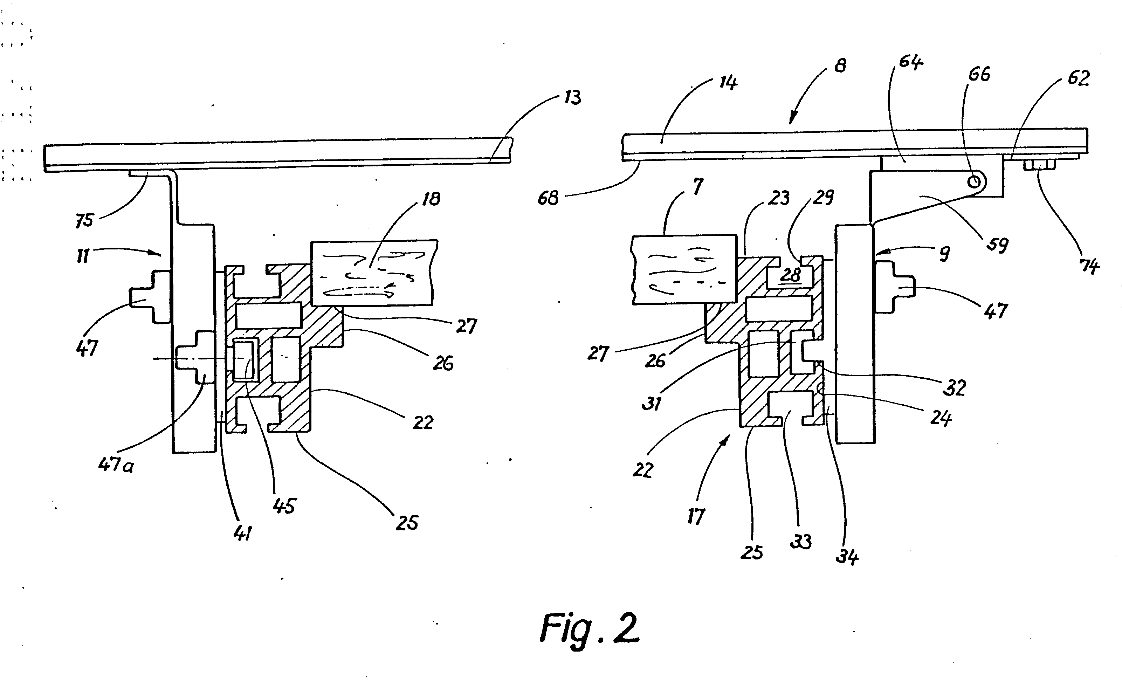

Über die Tischfläche 7 erstreckt sich eine platten- oder brettförmige Führungsschiene 8, die mit Hilfe in Fig. 2 gezeigter Stützeinrichtungen 9 und 11 höhenverstellbar über der Tischfläche 7 gehaltert ist. Die längliche Führungsschiene 8 weist eine im wesentlichen plane Oberseite 12 auf, auf der die Handkreissäge 3 mit ihrer Fußplatte 4 entlanggleitet. Parallel zu der rechten Kante 13 der Führungsschiene 8 verläuft eine an der Oberseite 12 ausgebildete Führungsrippe 14, über die eine in der Fußplatte 4 ausgebildete Führungseinrichtung 15 greift, um die Handkreissäge 3 auf der Führungsschiene 8 längszuführen. Der Abstand der Führungsrippe 14 von der Bezugskante 13 entspricht dem Abstand der Führungseinrichtung 15 von der der Führungsschiene 8 benachbarten Seite des Kreissägeblattes 5, so daß die gerade Bezugskante 13 unmittelbar in Verlängerung der Schnittfläche des auszuführenden Sägeschnitts verläuft.

Ferner weist der Bearbeitungstisch 1 einen verstellbaren Winkelanschlag 15 sowie einen ebenfalls verstellbaren Längsanschlag 16 auf.

Den Aufbau der Tischplatte 6 und die Halterung der Führungsschiene 8 zeigen die Fig. 2 bis 4. Die Tischplatte 6 besteht aus einem rechteckigen Rahmen 17, in den eine Platte 18 aus Holz oder Holzwerkstoff eingesetzt ist, und zwar so, daß die Oberseite der Holzplatte 18, die die Tischauflagefläche 7 bildet, mit Abstand über der Oberkante des Rahmens 17 verläuft. Der Rahmen 17 selbst ist aus Rechteckprofilstababschnitten 19 eines entsprechenden Aluminiumstrangpreßprofils mit Hilfe von Verbindungseckstücken 21 an den Ecken des Rahmens zusammengesetzt. Jeder der Vierkantprofilstäbe 19 weist eine Innenseite 22, eine Oberseite 23, eine Außenseite 24 sowie eine Unterseite 25 auf, die jeweils im wesentlichen ebene Flächen sind. An der Innenseite 22 ist ein in Längsrichtung des Profilstabes 19 durchgehender, im Querschnitt rechteckiger Flansch 26 angeformt, der eine ebene Oberseite 27 enthält, die die Auflage für die Holzplatte 18 darstellt. Der oberhalb des Flansches 26 befindliche Bereich in der Innenseite 22 ergibt eine seitliche Führung für die Tischplatte 18, die gegebenenfalls noch mit Hilfe von durch den Flansch 26 hindurchführende Schrauben befestigt sein kann.

Jeder der Profilstäbe 19 enthält in der Oberseite 23 eine in Längsrichtung verlaufende und in Richtung auf die Oberseite 23 offene T-Nut 28, deren Schlitz 29 die Oberseite 23 durchsetzt. Eine weitere in Längsrichtung des Profilstabes 19 durchgehende T-Nut 31 befindet sich im Bereich der Außenseite 24, wobei deren Schlitz 32 der T-Nut die Außenseite 24 durchsetzt. Schließlich kann noch eine dritte T-Nut 33 im Bereich der Unterseite 25 vorgesehen sein. Alle T-Nuten 28, 31 und 33 verlaufen parallel zu der Tischfläche 7. Die Außenseite 24 der Profilstäbe 19 bildet die Außenseite des Rahmens 17.

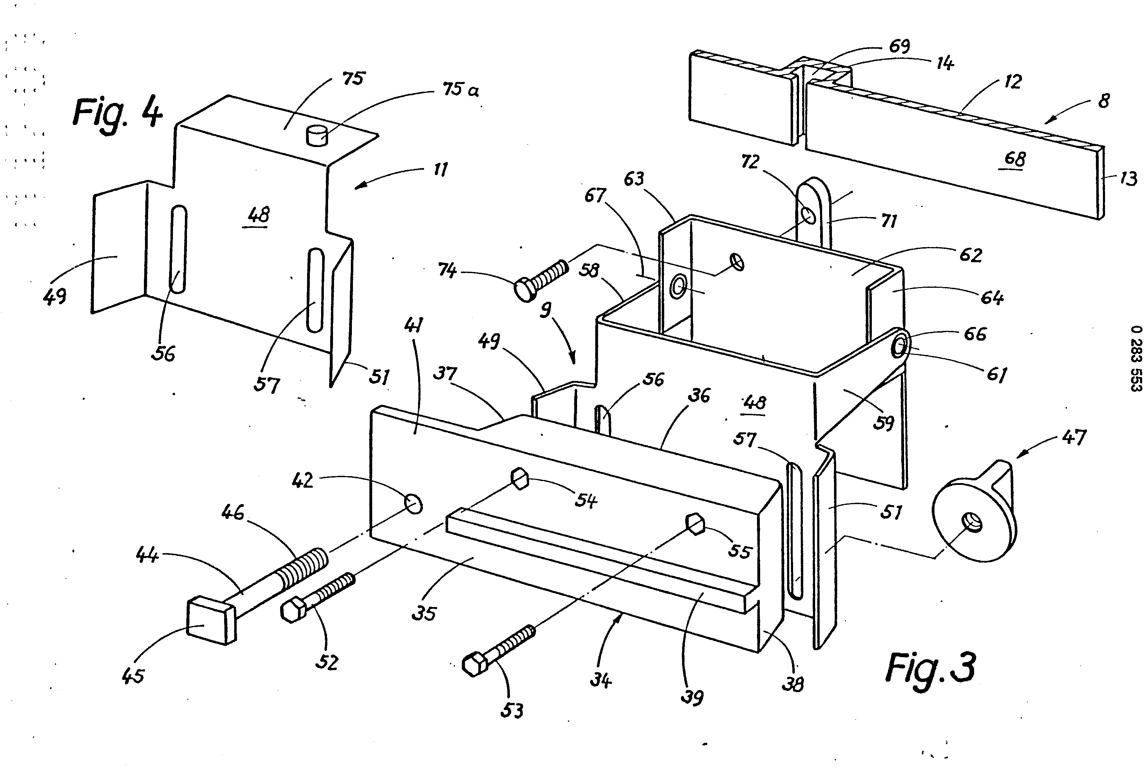

Die T-Nut 31 dient der Führung und Fixierung eines Parallelführungsgliedes 34 mit etwa trapezförmigem Querschnitt, das eine Innenseite 35, eine nahezu parallel verlaufende Außenseite 36 sowie zwei im Winkel zueinander verlaufende Seitenflächen 37 und 38 aufweist. Die Seitenflächen 37 und 38 dienen als Führungsflächen zur Parallelführung der Stützeinrichtung 9 bzw. der in Fig. 4 gezeigten Stützeinrichtung 11.

Auf der Innenseite 35 trägt das Parallelführungsglied 34 einen Führungssteg 39, der sich in Längsrichtung des Parallelführungsgliedes 34, d.h. von der Führungsfläche 38 zu der Führungsfläche 37, erstreckt und eine Dicke aufweist, die der Weite des Schlitzes 32 entspricht. Die Höhe des Steges 39 ist geringer als die Tiefe der T-Nut 31, damit der in den Schlitz 32 eingeführte Steg 39 nicht auf dem Grund der T-Nut 33 aufsteht.

Seitlich neben der Führungsfläche 37 ist ein plattenförmiger Flansch 41 angeformt, dessen eine Seite in Verlängerung der Innenseite 35 verläuft und dessen außenliegende Seite gegenüber der Außenseite 36 entsprechend der Größe der Führungsfläche 37 zurückspringt.

In Verlängerung des Steges 39 befindet sich in dem Flansch 41 eine Bohrung 42, die der Aufnahme einer T-Nutenschraube 44 mit rechteckigem Kopf 45 und Gewindeschaft 46 dient. Die T-Nutenschraube 44 steckt mit ihrem Vierkantkopf 45 in der T-Nut 31, während der Gewindeschaft 46 durch die Bohrung 42 hindurchführt. Mittels einer auf den Gewindeschaft 46 aufgeschraubten Mutter, die bspw. wie eine bei 47a veranschaulichte Mutter ausgeführt sein kann, läßt sich der Flansch 41 gegen die Außenseite 24 des Rahmens 17 verklemmen. Das Parallelführungsglied 34 ist dadurch unverrückbar an der Tischplatte 6 festzuklemmen.

Die Stützeinrichtung 9 ist von einem Blechformteil gebildet, das eine plane Grundplatte 48 aufweist, an dessen Seite zwei Flansche 49 und 41 angeformt sind, die durch Biegen hergestellt sind. Die Flansche 49 und 51 bilden auf ihrer Innenseite Führungsflächen, die mit den Führungsflächen 37 und 38 zusammenwirken, weshalb der Biegewinkel der Flansche 49 und 51 mit den Winkeln der beiden Führungsflächen 37 und 38 übereinstimmt, ebenso wie der Abstand zwischen den Führungsflächen 37 und 38 dem Abstand der Flansche 49 und 51 entspricht. Hierdurch ergibt sich eine Parallelführung der Stützeinrichtung 9, wenn diese an dem Parallelführungsglied 35 anliegt, wobei die Flansche 49 und 51 mit den Führungsflächen 37 und 38 in Eingriff stehen. Diese Flächen stehen senkrecht auf der durch die Tischfläche 7 definierten Fläche, so daß das Führungsglied 9 parallel zu einer Senkrechten auf der Ebene der Tischfläche 7 verschiebbar ist.

Die Klemmung der Stützeinrichtung 9 an dem Parallelführungsglied 34 erfolgt mittels zweier Sechskantkopfschrauben 52 und 53, die in entsprechend geformten Stufenbohrungen 54 und 55 des Parallelführungsgliedes 34 stecken, die oberhalb des Stegs 39 angeordnet sind. Da der Querschnitt der Stufenbohrung 54 bzw. 55 an den Querschnitt des Kopfes der Sechskantschrauben 52, 53 angepaßt ist, sind die beiden Kopfschrauben 52 und 53 in den Bohrungen 54 und 55 formschlüssig drehfest gehalten. Ihr Schaft steht auf der Außenseite 36 hervor und reicht in Langlöcher 56 und 57 hinein, die in der Grundplatte 48 zwischen den Flanschen 51 und 49 ausgebildet sind. Die Langlächer 56 und 57 erstrecken sich in der Grundplatte 48 in Verstellrichtung, d.h. senkrecht zu der durch die Tischfläche 7 definierten Ebene. Die Verklemmung erfolgt mit zwei Muttern, von denen eine bei 47 bspw. veranschaulicht ist. Die Muttern legen sich an der Rückseite der Grundplatte 48 an und pressen diese gegen die Außenseite 36 des Parallelführungsgliedes 34.

Oberhalb der beiden Flansche 49 und 51 sind an die Platte 48 zwei armartige Fortsätze 58 und 59 angeformt, die mit Abstand voneinander parallen zueinander verlaufen. Sie erstrecken sich im rechten Winkel zu der durch die Grundplatte 48 definierten Ebene in die entgegengesetzte Richtung wie die beiden Flansche 49 und 51. An ihren freien Enden enthalten die beiden Fortsätze 58 und 59 miteinander fluchtende Bohrungen 61, deren Achsen eine Scharnierachse definieren. Die Fortsätze 58 und 59 dienen der gelenkigen Lagerung einer im wesentlichen ebenen rechteckigen Befestigungsplatte 62, die zwei seitlich angeformte, parallel im Abstand zueinander verlaufende Leisten 63, 64 trägt. Der Abstand der Leisten 63 und 64 voneinander, und zwar gemessen an der Außenseite, entspricht der lichten Weite bzw. dem Abstand, den die beiden Fortsätze 58 und 59 an ihrer Innenseite voneinander haben.

In den beiden Leisten 63, 64 sind ebenfalls miteinander fluchtende Bohrungen vorgesehen. Die Verbindung zwischen der Halteplatte 62 und den Fortsätzen 58 und 59 geschieht mit Hilfe zweier Nieten 65 und 66, die in den miteinander fluchtenden Bohrungen der Halteplatte 62 und der Fortsätze 58 und 59 eingesteckt und dort vernietet sind. Die Halteplatte 62 ist auf diese Weise um eine zu der Außenseite 36 bzw. der Außenseite 24 des Rahmen 17 parallele Achse verschwenkbar, wobei diese Schwenkachse,die bei 67 gestrichelt angedeutet ist, außerhalb der durch den Rahmen 17 definierten Fläche liegt.

An der Halteplatte 62 ist die Führungsschiene 8 verankert, die in ihrer Unterseite 68 im Bereich der Führungsrippe 14 eine in Längsrichtung durchgehende und sich durch die Unterseite 68 öffnende T-Nut 69 enthält. In dieser T-Nut 69 steckt ein länglicher T-Nutenstein 71 mit zwei Gewindebohrungen 72,von denen aus Darstellungsgründen lediglich eine sichtbar ist. Entsprechend den Bohrungen 72 enthält auch die Halteplatte 62 Bohrungen 73, durch die Kopfschrauben 74 gegebenenfalls mit nennenswertem Radialspiel hindurchführen, die in die Gewindebohrungen 72 des T-Nutensteins 71 einschraubbar sind. Die Führungsschiene 8 ist hierdurch an der Halteplatte 62 bzw. der Stützeinrichtung 9 verklemmbar und und unverrückbar mit der Stützeinrichtung 9 verbunden. Sie verläuft rechtwinklig zu der hinteren Seitenfläche 24.

Infolge der Anbringung an der Stützeinrichtung 9 ist die Führungsschiene 8 um die ortsfeste Schwenkachse 67, die einerseits parallel zu der Tischfläche 7 und andererseits parallel zu der Außenseite 24 verläuft, ungehindert klapp-bzw. - schwenkbar.

Die Stützeinrichtung 11 unterscheidet sich, wie Fig. 4 zeigt, im wesentlichen von der Stützeinrichtung 9 durch einen Anlageflansch 75, der an der Oberkante der Grundplatte 48 rechtwinklig nach außen führend angebogen ist. Von der Oberseite des Anlageflansches 75 ragt ein Indexzapfen 75a nach oben, dessen Durchmesser der Weite des Schlitzes der T-Nut 69 in der Führungsschiene 8 entspricht, so daß der Indexzapfen 75a nahezu ohne Spiel in diesen Schlitz eingreifen kann. Infolge der zylindrischen Gestalt des Indexzapfens 75a ist die Spielfreiheit in jeder Azimutwinkelstellung der Führungsschiene 8 bezüglich der Achse des zylindrischen Indexzapfens 75a gegeben. Im übrigen ist der Aufbau der Stützeinrichtung 11,von den fehlenden Fortsätzen 58 und 59 abgesehen, der gleiche wie der Aufbau der Stützeinrichtung 9. Die Stützeinrichtung 11 ist deswegen an einem Parallelführungsglied 34 zu haltern, das denselben Aufbau aufweist wie das Parallelführungsglied 34 für die Stützeinrichtung 11, das jedoch an derjenigen Außenseite 24 der Tischplatte 6 angebracht ist, die der Stützeinrichtung 11 gegenüberliegt.

Anstelle des zylindrischen Indexzapfens 75a, der als getrenntes Teil auf dem Auflageflansch 75 aufgesetzt ist, kann auch ein Indexzapfen verwendet werden, der als Blechzunge entweder aus dem Auflageflansch 75 oder aus der Grundplatte 48 ausgeschnitten und nach oben aufragend umgebogen ist. In jedem Falle dient er zusammen mit der Auflagefläche 75 dazu, die Führungs schiene 8 an dieser Stelle sowohl seitlich, d.h. in einer Ebene parallel zu der Tischfläche 7 als auch nach unten, nämlich senkrecht zu der Tischfläche 7 festzulegen.

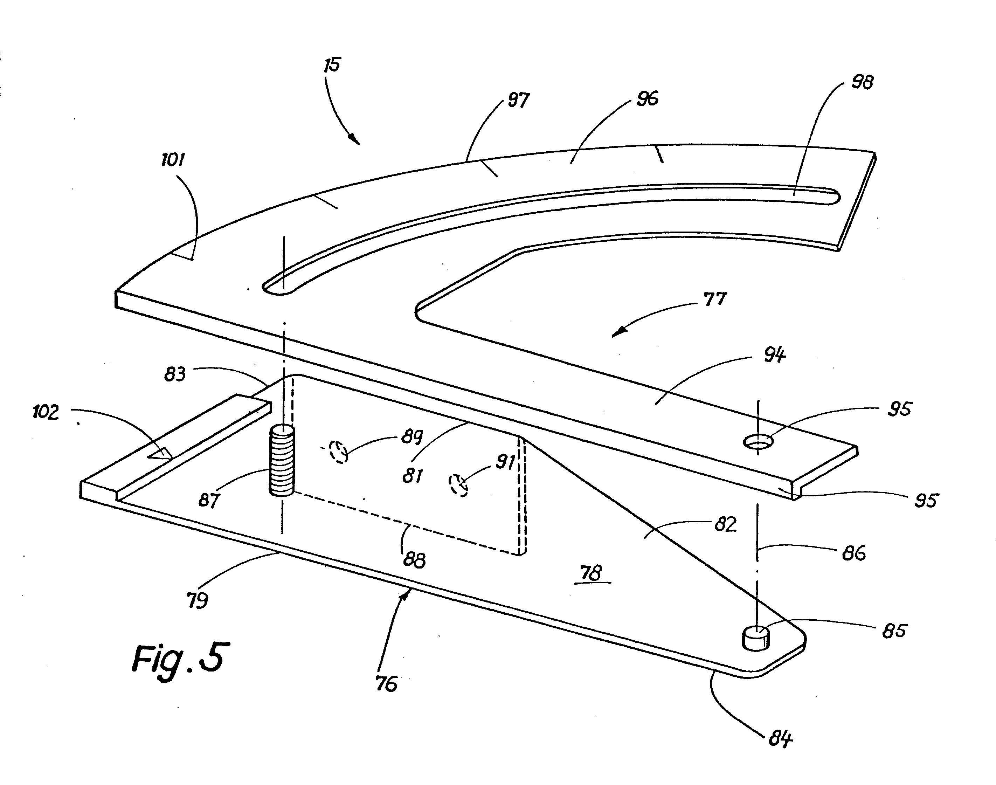

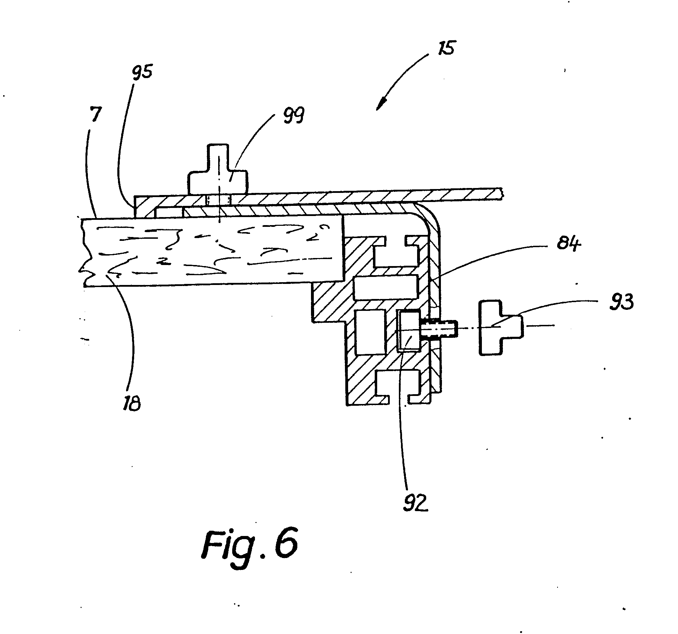

Der Winkelanschlag 15 hat den in den Fig. 5 und 6 gezeigten Aufbau. Er besteht aus einem Unterteil 76 sowie einem darauf schwenkbar gehalterten und dagegen verklemmbaren Oberteil 77. Das Unterteil 76 enthält eine im Grundriß etwa trapezförmige Platte 78 mit zwei parallel zueinander verlaufenden Kanten 79 und 81 sowie schräg zueinander verlaufenden Kanten 82 und 83. Die Kante 83 erstreckt sich rechtwinklig zu den Kanten 79 und 81, während die Kante 82 im spitzen Winkel zu der Kante 79 verläuft, weshalb hierdurch ein verhältnismäßig spitz zulaufendes Ende 84 zustandekommt, an dem ein nach oben aufragender zylindrischer Zapfen 85 angebracht ist, dessen Achse eine Schwenkachse 86 für das Oberteil 77 definiert. Mit Abstand von dem zylindrischen Bolzen 85 ist an dem Unterteil 76 ein ebenfalls nach oben aufragender Gewindebolzen 87 befestigt, der der Arretierung des Oberteils 77 auf dem Unterteil 76 dient.

Zur Befestigung des Winkelanschlages 15 an der Tischplatte 6 ist an der Kante 81 ein Flansch 88 angeformt, der sich von der Platte 78 nach unten im rechten Winkel erstreckt. Der Flansch 88 bildet auf der Innenseite eine plane Anlagefläche für die Außenseite 24 des Rahmens 17, und er enthält zwei Bohrungen 89 und 91 für zugehörige T-Nutenschrauben 92, deren Kopf sich in der seitlichen T-Nut 31 befindet. Die Verklemmung geschieht mittels auf die T-Nutenschrauben 92 aufschraubbarer Muttern 93, die sich an der Außenseite des Flansches 88 anlegt. Da der Abstand der Bohrungen 89 und 91 von der Unterseite der Platte 78 etwa dem Abstand entspricht, den die Tischfläche 7 von der Mitte der seitlichen T-Nut 31 hat, liegt der Winkelanschlag 15 mit der Unterseite der Platte 78 auf der Tischfläche 7 auf, wenn die T-Nutenschrauben mit ihrem Kopf in der zugehörigen T-Nut 31 stecken.

Das Oberteil 77 des Winkelanschlags 15 enthält einen flachen länglichen geraden Schenkel 94, an dessen Vorderkante eine gerade nach unten weisende Leiste 95 angeformt ist, deren nach außen zeigende gerade Fläche eine Anschlagfläche für das Werkstück 2 darstellt. Die Abmessungen der Leiste 95 sind so getroffen, daß sie gerade eben die Vorderkante 79 des Unterteils 78 übergreift, ohne bei aufgesetztem Winkelanschlag 15 auf der Tischfläche 7 zu streifen.

Der längliche Schenkel 94 enthält in seinem rechten Ende eine zylindrische Bohrung 95 für den Schwenkzapfen 85, der mit seiner Oberseite mit der Oberseite des Schenkels 94 bündig ist. Am anderen Ende des länglichen geraden Schenkels 94 ist ein bogenförmiger Schenkel 96 angeformt, dessen außen liegende Kante 97 einen Kreisbogen beschreibt, dessen Mittelpunkt die Schwenkachse 86 ist. Der flache bogenförmige Schenkel 96 läuft ebenso wie der Schenkel 94 in einer zu der Tischfläche 7 parallelen Ebene und er enthält ein bogenförmig gekrümmtes Langloch 98, dessen radialer Abstand von der Bohrung 95 dem Abstand entspricht, den der Gewindebolzen 87 vom Schwenkzapfen 85 hat. Der Gewindebolzen 87 ragt deswegen in jeder Schwenk stellung des Oberteils 77 gegenüber dem Unterteil 76 ungehindert durch das bogenförmige Langloch 98, damit eine auf den Gewindebolzen 87 aufzuschraubende Mutter 99 das Oberteil 77 auf den Unterteil 76 festklemmen kann. Die Höhenerstreckung des Winkelanschlages beträgt zumindest im Bereich des länglichen Schenkels 94 bis etwa zum Übergang in den gekrümmten Schenkel 96 ca. 10 mm, damit der Winkelanschlag, wie in Fig. 1 gezeigt, mit dem länglichen Schenkel 94 ohne weiteres unter die Führungsschiene 8 schiebbar ist, wenn deren Unterseite 68 einen Abstand von der Tischfläche 7 aufweist, der größer oder gleich 10 mm ist.

Um die Winkeleinstellung des Winkelanschlages 15 zu erleichtern, trägt er im Bereich seiner bogenförmigen Kante 97 gegebenenfalls eine Gradeinteilung 101, die mit einer Indexmarke 102 auf dem Unterteil 76 zusammenwirkt. Diese Indexmarke 102 befindet sich im Bereich der Kante 83 und ist gegebenenfalls erhöht angeordnet, um eine Paralaxe beim Ablesen der Winkelskala zu vermeiden.

Die Verwendung des beschriebenen Bearbeitungstisches 1 geschieht folgendermaßen: Die Justierung der Grundeinstellung des Winkelanschlages 15 zu der Bezugskante 13 der Führungsschiene 8 geschieht indem die beiden Klemmschrauben 74 gelöst werden, damit die Führungsschiene 8, die lose auf der Tischfläche 7 aufliegt, seitlich verschwenkt werden kann, bis die Anschlagfläche 95 rechtwinklig zu der Bezugskante 13 verläuft. Die beiden Klemmschrauben 74 werden nun angezogen, womit die Grundeinstellung der Führungsschiene 8 zu der Anlagefläche 95 erreicht ist; sie verlaufen rechtwinklig zueinander.

Durch Lösen der Verklemmung der T-Nutenschraube 44 läßt sich jetzt das Parallelführungsglied 34 mit der zugehörigen Stützeinrichtung 9 und der Führungsschiene 8, wie Fig. 1 zeigt, längs der hinteren Außenfläche 24 des Rahmens 17 so weit verschieben, bis die Bezugskante 13 der Führungsschiene 8 in der gewünschten Position über der Tischfläche 7 ist. Das Anziehen der T-Nutenschraube 44 legt das Parallelführungsglied 34 in der gewünschten Stellung an dem Rahmen 17 unverrückbar fest. Es kann jetzt das andere Parallelführungsglied 34 mit der abgesenkten losen Stützeinrichtung 11 in diejenige Stellung gebracht werden, in der der Indexzapfen 75a ohne seitliches Verdrücken bzw. Verspannen der Führungsschiene 8 in deren T-Nut 69 eingreift. In dieser Stellung wird die T-Nutenschraube 44 für das zugehörige Parallelführungsglied 34 verklemmt. Damit ist die Führungsschiene sowohl an der hinteren als auch an der vorderen Außenseite 24 des Rahmens 17 in Richtung parallel zu der Tischfläche 7 unverrückbar festgelegt und sie kann große Seitenkräfte ohne Verstellung aufnehmen.

Die außerhalb der Hinterkante sowie außerhalb der Vorderkante der Tischplatte 6 unterstützte Führungsschiene 8 kann aber jederzeit um die Scharnierachse 67 in eine Stellung hochgeklappt werden, in der die Führungsschiene 8 etwa senkrecht zu der Tischfläche aufsteht. Beim Herunterklappen gelangt der Indexzapfen 75a in die T-Nut 69 und erzwingt wiederum die winkelrechte Lage, bezogen auf die Anlagefläche 95. In der aufgeklappten Stellung der Führungsschiene 8 wird das Werkstück 2 auf die Tischfläche 7 gelegt und anschließend wird die Führungsschiene 8 heruntergeschwenkt.

Es werden nun die mit Knebel versehenen Muttern 47 gelöst, und zwar sowohl bei der Stützeinrichtung 9 als auch bei der Stützeinrichtung 11, damit sich die Führungsschiene 8 entsprechend der Oberseite des Werkstückes 2 einstellen kann, bis die Führungsschiene 8 mit ihrer Unterseite 68 satt über die gesamte Breite des Werkstückes 2 auf diesem aufliegt. Hierbei gleitet die Stützeinrichtung 9 auf dem zugehörigen Parallelführungsglied 34 nach oben oder nach unten, je nach dem, ob das neue Werkstück 2 dicker oder dünner als das Werkstück der vorhergehenden Einstellung ist. Nachdem die Führungsschiene 8 auf dem Werkstück 2 voll aufliegt, wozu das Werkstück 2 vorzugsweise etwa unter dem Schwerpunkt der Führungsschiene 8 angeordnet ist, werden die Muttern 47 der Stützeinrichtung 9 wieder angezogen, um die Stützeinrichtung 9 in der Höhe zu fixieren. Ferner wird die Stützeinrichtung 11 von Hand gegen die Unterseite 68 der Führungsschiene 8 vorgeschoben, bis der Auflageflansch 75 das freie Ende der Führungsschiene 8 gerade eben unterstützt, ohne die Führungsschiene 8 von der Oberseite des Werkstückes 2 abzuheben. In dieser Stellung wird die Stützeinrichtung 11 durch Anziehen der zugehörigen Muttern 47 auf den Parallelführungsglied 34, das zu dieser Stützeinrichtung 11 gehört, in der Höhe fixiert.

Als nächstes wird der Winkelanschlag 15 eingerichtet. Durch Lösen und anschließendes Anziehen der Muttern 99 wird das Oberteil 77 auf den gewünschten Schnittwinkel eingestellt, wobei das Oberteil 77 um die Schwenkachse 86, die auf der Tischfläche 7 senkrecht steht, geschwenkt wird. Dabei ist bevorzugt der Winkelanschlag 15 herstellungsseitig so justiert, daß, wenn die Indexmarke 102 auf die Geradmarke für 90° zeigt, die Anschlagfläche 95 rechtwinklig zu der Bezugskante 13 der Führungsschiene 8 verläuft, wenn der Winkelanschlag 15 an der hinteren Außenseite 24 des Rahmens 17 angebracht ist. Nach erfolgter Einstellung des Schnittwinkels an dem Winkelanschlag 15 kann durch Lösen der Muttern 93 der Winkelanschlag 15 längs der hinteren Außenseite 24 verschoben werden, bis die Anschlagleiste 95 gerade eben hinter der Bezugskante 13 der Führungsschiene 8 zurückspringt. In jedem Falle ermöglicht die zwischen dem bogenförmigen Schenkel 97 und dem länglichen Schenkel 94 gebildete Ausnehmung ein freies Hochklappen der Führungsschiene 8, wobei dann der über die Stützeinrichtung 9 hinauskragende Teil der Führungsschiene 8 durch die Ausnehmung hindurch klappt.

Falls andere Schnittwinkel gewünscht sind, kann der Winkelanschlag 15 auch beispielsweise an der linken Außenseite 24 des Rahmens 17 befestigt werden.

Es kann nun das Werkstück 2 am Winkelanschlag 15 anliegend auf der Tischfläche 7 verschoben werden, bis der Anriß auf dem Werkstück 2 an der Bezugskante 13 liegt. Es muß nun noch die Schnittiefe in der Handkreissäge 3 eingestellt werden, damit das Kreissägeblatt 5 bei niedergedrückter und auf der Führungsschiene 8 stehender Handkreissäge 3 in die Tischfläche 7 einschneidet, jedoch nicht tiefer als es dem Abstand der Tieffläche 7 bis zu der Oberseite 23 des Rahmens 17 entspricht, damit auf keinen Fall das Sägeblatt 5 am Rahmen 17 beschädigt werden könnte, wenn die Handkreissäge 3 über die Hinterkante der Tischplatte 7 hinausgeschoben werden würde.

Sobald alle Einstellungen vorgenommen sind, wird die Handkreissäge eingeschaltet und, ausgehend von der Vorderkante der Tischplatte 6, in Richtung auf die Hinterkante auf der Führungsschiene 8 vorgeschoben, wobei das Werkstück 2 entlang dem Anriß durchgeschnitten wird. Da sowohl vor als auch nach dem Schnittvorgang beide Teile des Werkstückes 2 auf der Tischfläche 7 aufliegen, kann das Werkstück während des Schnitts nicht im Schnittbereich auseinanderbrechen und dabei splittern.

Mit der gezeigten Anordnung können ohne Veränderung der Höheneinstellung für die Führungsschiene 8 alle Werkstücke bearbeitet werden, die dieselbe Dicke aufweisen, und zwar unabhängig davon, wie groß ihre Erstreckung in Schnittrichtung ist, da die Führungsschiene 8 auch an seinem vorderen Ende unterstützt wird und deswegen nicht auf die Unterstützung durch das Werkstück angewiesen ist.

Um ein Verrutschen des Werkstücks 2 auf der Tischfläche 7 wirksam zu vermeiden, ist die Holzplatte 18 vorzugsweise naturbelassen. Andererseits kann sie leicht aus dem Rahmen 17 ausgewechselt werden, wenn ihre Oberseite zu stark mit Sägeschnitten versehen ist. Da allerdings die Führungsschiene 8 bei der Höhenverstellung die seitliche Lage exakt beibehält, wird das Sägeblatt 5 immer an der gleichen Stelle durch die Tischfläche 7 laufen und keine weiteren Einschnitte erzeugen. Auch bei anderen Schnittwinkeln entstehen keine zusätzlichen Einschnitte, weil immer die seitliche Lage der Führungsschiene 8 unverändert bleibt, die durch die Position der Stützeinrichtung 9 mit dem Scharnier 62 festgelegt ist.

Anstatt bei Winkelschnitten den Winkelanschlag 15 zu verstellen, ist es auch möglich, entsprechend dem gewünschten Schnittwinkel die Führungsschiene 8 schräg gegenüber der Anschlagfläche 95 verlaufen zu lassen. Um dies zu erreichen, wird eine der Schrauben 74 aus dem zugehörigen T-Nutenstein 71 entfernt, damit die Führungsschiene 8 um die noch verbliebene Schraube 74 auf dem Scharnierteil 62 um eine zu der Scharnierachse 67 rechtwinklige Achse hin- und herschwenkbar ist. Durch seitliches Verfahren des Parallelführungsgliedes 34 samt der Stützeinrichtung 11 wird die Führungsschiene 8 auf den gewünschten Winkel verschwenkt, da der Indexzapfen 75a beim Verschieben des Parallelführungsgliedes 84 längs der vorderen Außenseite 24 die Führungsschiene 8 mit verschwenkt. Nach Erreichen der gewünschten Schwenkstellung wird die verbliebene Klemmschraube 74 erneut angezogen, damit die Führungsschine 8 beim Auf- und Zuklappen immer wieder die gewünschte Winkelstellung erreicht. Diese Einstellweise ist vorteilhaft, wenn lange Bretter oder Paneelbretter mit immer wieder gleichem Winkel zugeschnitten oder gefräst werden sollen, da auf diese Weise das zu bearbeitende Brett gerade über die Seitenkante des Bearbeitungstisches 1 hinwegläuft und nicht zum Verkanten neigt. Die Unterstützung des freien Endes ist dann einfacher zu handhaben.

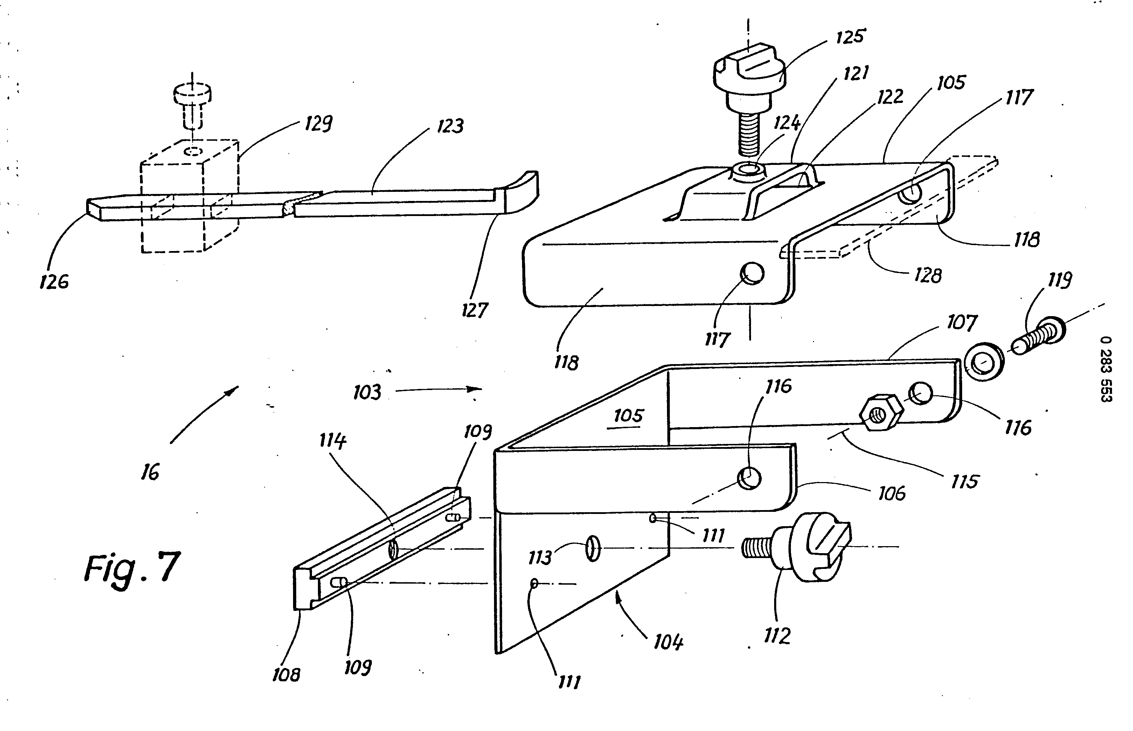

Wenn viele Werkstücke jeweils auf gleiche Länge zugeschnitten werden sollen, ist die Verwendung des in Fig. 7 im einzelnen gezeigten Längsanschlages 16 vorteilhaft. Dieser enthält einen Halter 103, bestehend aus einem an der Außenseite 24 des Rahmens 17 anbringbaren Unterteil 104 sowie einem an diesem schwenkbar gelagerten, im Querschnitt etwa C-förmigen Oberteil 105. Das Unterteil 104 weist eine ebene Platte 100 auf, an deren beiden Seitenrändern rechtwinklig wegstehend zwei Fortsätze 106, 107 abgebogen sind. Die Fortsätze 106, 107 befinden sich im oberen Bereich der Platte 105, so daß sie im an der Außenseite 24 angebrachten Zustand knapp unterhalb der durch die Tischfläche 7 gebildeten Ebene verlaufen. Die Halterung des Unterteils 104 geschieht mit Hilfe eines länglichen T-Nutensteins 108, der in der seitlichen T-Nut 31 des Rahmens 17 aufgenommen werden soll. Der T-Nutenstein 108 enthält endseitig zwei zylindrische Zapfen 109, die mit entsprechenden Paßbohrungen 111 in der Platte 100 fluchten und eine Verdrehsicherung für den T-Nutenstein 108 gegenüber dem Unterteil 104 darstellen. Die Verklemmung des T-Nutensteins 108 geschieht mittels einer mit einem Betätigungsknebel versehenen Kopfschraube 112, die durch eine entsprechende Bohrung 113 der Grundplatte 105 in eine Gewindebohrung 114 des T-Nutensteins 108 einschraubbar ist.

Das Oberteil 105 ist zwischen den beiden Fortsätzen 106, 107 schwenkbar um eine gestrichelt angedeutete Scharnierachse 115 gelagert, wozu in den beiden Fortsätzen 106, 107 in der Nähe von deren freien Enden zwei miteinander fluchtende Bohrungen 116 vorgesehen sind. Mit diesen Bohrungen 116 fluchten Boh rungen 117, die in nach unten abgewinkelten Leisten 118 ausgebildet sind. Der über alles gemessene Abstand der beiden parallel zueinander nach unten verlaufenden Leisten 118 des Oberteils 105 entspricht der lichten Weite, den die beiden parallel und mit Abstand voneinander verlaufenden Fortsätze 106, 107 voneinander aufweisen. In den Bohrungen 116, 117 stecken Gewindeschrauben 119, die das Oberteil 105 schwenkbar mit dem Unterteil 104 verbinden.

In der planen Oberseite (bezogen auf die Darstellung von Fig. 7) des Oberteils 105 ist eine bügelartige Ausklinkung 21 vorgesehen, die eine Öffnung 122 für einen einzuschiebenden länglichen geraden Stab 123 begrenzt. In der Mitte der Ausklinkung 21 befindet sich eine Gewindebohrung 124 für eine mit einem Knebel versehene Klemmschraube 125.

Der Stab 123 hat einen rechteckigen Querschnitt und ist an einem Ende bei 126 zugespitzt, während das andere Ende bei 127 unter Ausbildung einer Art Haken nach oben umgebogen ist. Die außen liegende Stirnfläche ist geringfügig zylindrisch nach außen bombiert, wobei die gedachte Zylinderachse senkrecht zu der Flachseite des Stabes 123 verläuft.

Im Gebrauch wird der Stab 123 in die Öffnung 122 eingeführt und gleitet beim Vorschieben knapp oberhalb bzw. auf der Tischfläche 7. Sobald eines seiner beiden freien Enden 126 bzw. 127 den gewünschten Abstand zu der Bezugskante 13 der Führungsschiene 8 erreicht hat, wird die Klemmschraube 125 angezogen,wodurch der Stab 123 auf der Oberseite des Oberteils 105 festgeklemmt wird.

Die abgerundeten bzw. zugespitzten Enden 126, 127 ergeben dabei Anschlagflächen, die möglichst wenig die Ausrichtung des Werkstückes am Winkelanschlag 15 beeinträchtigen.

Falls der Längsanschlag 16 im Wege ist, weil größere Stücke bearbeitet werden sollen, genügt es, ihn um die Scharnierachse 115 hochzuklappen.

Darüber hinaus ist es möglich, das Oberteil 105 mit einer gestrichelt angedeuteten plattenförmigen Verlängerung 128 zu versehen, die sich, bezogen auf die Achse 115,in die entgegengesetzte Richtung wie der übrige Teil des Oberteils 105 erstreckt und seitlich über die beiden Leisten 118 hinaussteht. Die Verlängerung 128 begrenzt den Klappwinkel, um den das Oberteil 105 um die Schwenkachse 115 zu klappen ist, auf ca. 180°, d.h. auf denjenigen Winkel, in dem die Oberseite des Oberteils 105 wiederum etwa parallel zu der Tischfläche 7 verläuft. Der Fortsatz 128 wirkt zu diesem Zweck mit den Fortsätzen 106, 107 zusammen, indem er sich an deren nach unten weisende Kanten anlegt.

Auch in dieser Stellung des Oberteils 105 ist der Stab 123 als Längsanschlag zu verwenden, wobei er als Halter für einen darauf sitzenden, gestrichelt angedeuteten Reiter 129 dient.

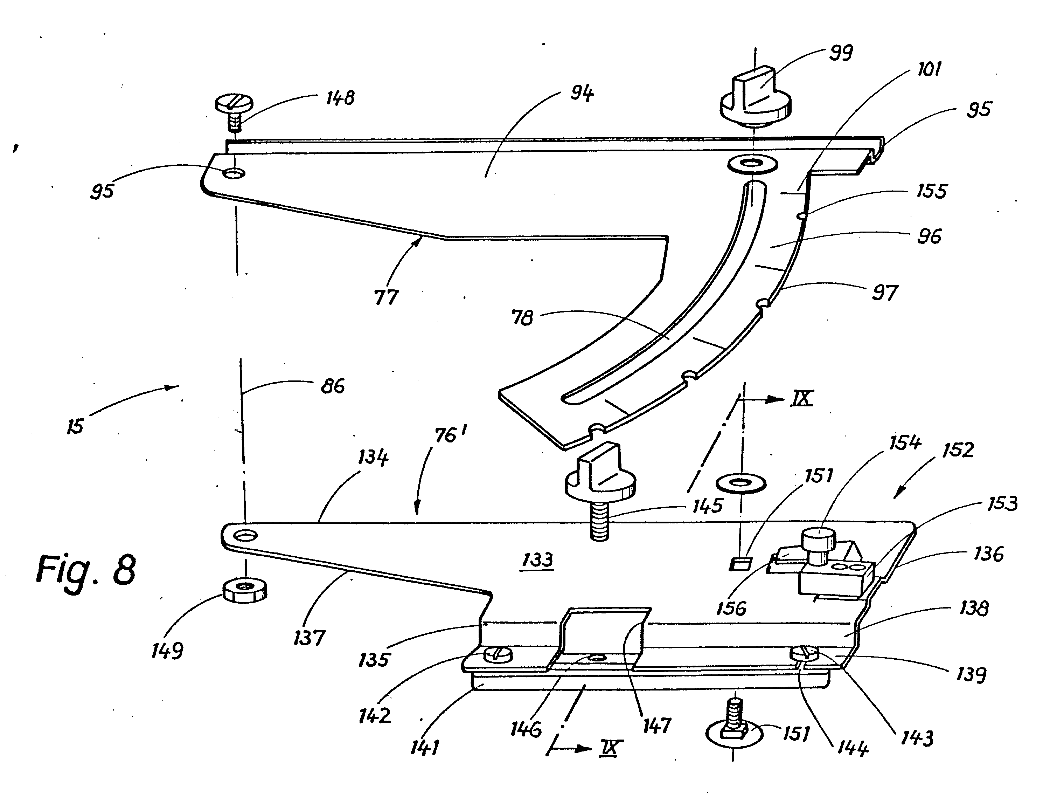

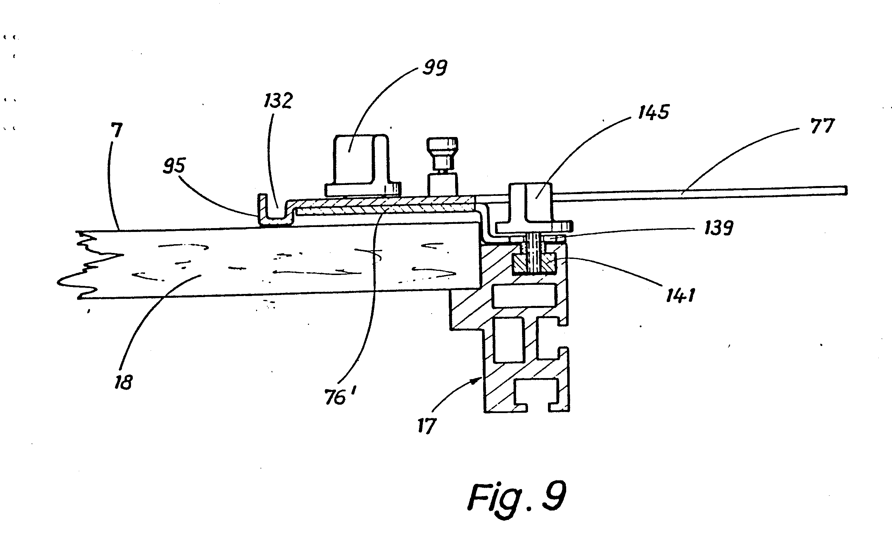

In den Fig. 8 und 9 ist ein weiterer Winkelanschlag 15 gezeigt, bei dem sich der Verlauf der Anschlagfläche 95 zu der Bezugskante 13 der Führungsschiene 8 ohne Eingriffe an der Führungsschiene 8 in begrenztem Maße justieren läßt. Der Winkelanschlag 15 nach den Fig. 8 und 9 besteht ebenfalls aus einem Oberteil 77 und einem Unterteil 78', wobei das Oberteil 77 im wesentlichen denselben Aufbau hat wie das Oberteil 77 nach Fig. 5. Der einzige Unterschied besteht darin, daß bei Fig. 5 die Anschlagfläche 95 von einer nach unten abgewinkelten Leiste des langen Schenkels 94 gebildet ist, während bei dem Oberteil 77 nach den Fig. 8 und 9 der längliche gerade Schenkel 94 eine angeformte U-förmige, nach oben offene Rinne 132 aufweist, von der eine Seitenfläche die Anschlagfläche 95 bildet. Es sind deswegen die an dem Winkelanschlag 15 nach den Fig. 8 und 9 wiederkehrenden Teile, soweit sie aus Fig. 5 bzw. bekannt sind, mit demselben Bezugzeichen versehen.

Das Unterteil 76' besteht aus einer etwa trapezförmigen Platte 133 mit zwei zueinander parallelen Kanten 134, 135 sowie mit einer Kante 136, die rechtwinklig zu den beiden Kanten 134 und 135 verläuft und einer schräg oder im spitzen Winkel zu der Kante 134 verlaufenden Kante 137. Die genaue Gestalt ergibt sich aus Fig. 8. Im Bereich der kürzeren Kante 135 ist die ebene aus Blech bestehende Platte 133 nach unten unter Ausbildung eines vertikal verlaufenden länglichen Stegs 138 sowie eines Auflageflansches 139 abgekröpft. Die Unterseite des Auflageflansches 139 verläuft parallel und im Abstand zu der Unterseite der ebenen trapezförmigen Platte 133, und zwar in einem Abstand, den die Oberseite 23 des Rahmens 17 etwa von der Tischfläche 7 aufweist.

Die Halterung der Verklemmung des Winkelanschlages 15 geschieht mit einem länglichen T-Nutenstein 141, der zum Einschieben in die obere T-Nut 28 vorgesehen ist und mit Hilfe zweier Klemmschrauben 142, 143 gegen die Unterseite des länglichen Anlageflansches 139 verspannt ist. Die Schraube 142 führt zu diesem Zweck durch eine in der Darstellung nicht sichtbare Bohrung, während die Schraube 143 in einem Schlitz 144 sitzt, der in Richtung von der Leiste 138 weg offen ist. Auf diese Weise ist durch Lösen der beiden Schrauben 142 und 143 der T-Nutenstein 141 gegenüber der Platte 133 geringfügig schwenkbar. Die Schwenkachse bildet dabei die dem spitzen Ende der Platte 133 benachbarte Schraube 142.

Verklemmt wird das Unterteil 76' in der T-Nut 28 durch eine Klemmschraube 145, die in eine Gewindebohrung 146 des T-Nutensteins 141 einzuschrauben ist. Die Gewindebohrung 146 befindet sich zwischen den beiden Klemmschrauben 142 und 143, wobei zum Zwecke der Zugänglichkeit das Unterteil 76' im Bereich der als Durchgangsbohrung ausgebildeten Gewindebohrung 146, wie gezeigt, mit einer Ausnehmung 147 versehen ist. Das an der Unterseite des T-Nutensteins 141 vorstehende Ende der Schraube 145 kommt mit dem Grund der T-Nut 28 in Eingriff und verklemmt den T-Nutenstein 141 in der T-Nut 28.

Das aus Blech gebogene Oberteil 77 ist mit dem ebenfalls aus Blech gebogenen Unterteil 76' einerseits durch die die Schwenkachse 86 bildende Schraube 148 mit deren Mutter 149 drehbar verbunden und außerdem mittels einer Halbrundkopfschraube 151 mit Vierkantansatz (Schloßschraube) sowie der Gegenmutter 99 verklemmbar. Die Schraube 151 sitzt in einer entsprechenden vierkantigen Öffnung 152 des Unterteils 76' und ist dort unverdrehbar gehalten. Durch Festziehen der Gegenmutter 99 wird das Oberteil in der jeweiligen Schwenkstellung bezüglich der Schraube 148 festgelegt.

Um ein leichtes Einstellen immer wiederkehrender Winkelschnitte zu erleichtern, ist eine Indexeinrichtung 152 vorgesehen, die ein auf der Oberseite des Unterteils 76' in der Nähe von der Seitenkante 136 vorgesehenes Gehäuse 153 aufweist, in dem längsverschieblich ein zylindrischer Indexbolzen 154 gelagert ist. Der Indexbolzen 154 ist durch eine aus Darstellungsgründen nicht sichtbare Feder in Richtung auf die Oberseite des Unterteils 76' zu vorgespannt und kann von Hand von der Oberseite gegen die Wirkung der Feder abgehoben werden. Zwischen dem Gehäuse 153 und der Oberseite der Platte 133 ist ein Spalt frei, durch den der Randbereich 97 des gekrümmten Schenkels 96 des Oberteils 77 läuft. Dieser Randbereich enthält teilzylindrische Ausnehmungen 155, in die der Indexbolzen 154 einrasten kann.

Außerdem ist auf der Oberseite des Unterteils 76' eine nach oben ausgeklinkte und abgekröpfte Lasche 156 vorgesehen, die ebenfalls unter Ausbildung eines Spaltes parallel und im Abstand zu der Oberseite des Unterteils 76' verläuft. Die Lasche bildet eine Anzeigemarke, die mit der Gradeinteilung 101 zusammenwirkt und die Winkeleinstellung der Anschlagfläche 95 anzeigt.

## Ansprüche

1. Bearbeitungstisch für mittels eines Handwerkzeugs, wie einer Handkreissäge, einer Oberfräse od.dgl., zu bearbeitende Werkstücke,

mit einer rechteckigen, im wesentlichen ebenen Tischplatte, deren Tischfläche eine Auflagefläche für das Werkstück bildet und die vier gerade Seitenflächen aufweist,
einer sich über der Auflagefläche erstreckenden Führungsschiene, die mittels im Bereich der Seitenflächen an der Tischplatte befestigter Stützeinrichtungen, von denen wenigstens eine mit der Führungsschiene verbunden ist, mit Abstand über der Tischfläche gehalten ist,

dadurch gekennzeichnet, daß die lediglich eine eine Führungseinrichtung (14) für das Werkzeug (3) aufweisende Führungsschiene (8) mit der einen Stützeinrichtung (9) über ein wenigstens eine Scharnierachse (67) aufweisendes Scharnier (58, 59, 62) verbunden ist und auf der anderen Stützeinrichtung (11) aufliegt, daß beide Stützeinrichtungen (9, 11) höhenverstellbar gegenüber der Tischfläche (7) sind, und daß die Führungsschiene (8) auf seiner der Tischfläche (7) zugekehrten Unterseite (68) eine Anlagefläche für das Werkstück (2) bildet.

2. Bearbeitungstisch nach Anspruch 1, dadurch gekennzeichnet, daß die Scharnierachse (67) in einer zu der Tischfläche (7) parallelen Ebene verläuft.

3. Bearbeitungstisch nach Anspruch 1, dadurch gekennzeichnet, daß die Scharnierachse (67) außerhalb der Tischfläche (7) verläuft.

4. Bearbeitungstisch nach Anspruch 1, dadurch gekennzeichnet, daß die Scharnierachse (67) parallel zu einer Seitenfläche (24) verläuft.

5. Bearbeitungstisch nach Anspruch 1, dadurch gekennzeichnet, daß die Führungsschiene (8) auf der anderen Stützeinrichtung (11) lose aufliegt.

6. Bearbeitungstisch nach Anspruch 1, dadurch gekennzeichnet, daß die Scharnierachse (74) bei in der Gebrauchsstellung befindlichen Führungsschiene (8) senkrecht zu einer die Tischfläche (7) enthaltenden Ebene verläuft.

7. Bearbeitungstisch nach Anspruch 1, dadurch gekennzeichnet, daß an der Tischplatte (6) ein Winkelanschlag (15) gehaltert ist, der eine Anschlagfläche (95) für das Werkstück (2) aufweist und dessen Anschlagfläche (95) um eine zu der Tischfläche (7) senkrechte Achse (86) verstellbar und fixierbar ist.

8. Bearbeitungstisch nach Anspruch 1, dadurch gekennzeichnet, daß beide Stützeinrichtungen (9, 11) an den Seitenflächen (24) der Tischplatte (6) angeordnet und dort verankert sind.

9. Bearbeitungstisch nach Anspruch 1, dadurch gekennzeichnet, daß beide Stützeinrichtungen (9, 11) in Richtung parallel zu wenigstens zwei einander gegenüberliegenden Seitenflächen (24) sowie parallel zu der Tischfläche (7) verstellbar sind.

10. Bearbeitungstisch nach Anspruch 1, dadurch gekennzeichnet, daß jeder Stützeinrichtung (9, 11) ein Parallelführungsglied (34) zugeordnet ist, das Parallelführungsflächen (37, 38) trägt, die mit entsprechenden Parallelführungsflächen (49, 51) an den Stützeinrichtungen (9, 11) zusammenwirken und jede Stützeinrichtung (9, 11) parallel zu einer Senkrechten, zu einer die Tischfläche (7) enthaltenden Ebene führen, und daß den Parallelführungsgliedern (34) Klemmeinrichtungen (52, 53, 47) zugeordnet sind, durch die die jeweilige Stützeinrichtung (9, 11) in einer beliebigen Höhe an dem Parallelführungsglied (34) verklemmbar ist.

11. Bearbeitungstisch nach Anspruch 10, dadurch gekennzeichnet, daß dem Parallelführungsglied (34) eine weitere Klemmeinrichtung (44, 47a) zugeordnet ist, durch die das Parallelführungsglied (34) an der jeweiligen Seitenfläche (24) zu fixieren ist.

12. Bearbeitungstisch nach Anspruch 10, dadurch gekennzeichnet, daß die Klemmeinrichtung (52, 53, 47) zum Fixieren der Stützeinrichtung (9, 11) an dem Parallelführungsglied (34) ein oder zwei Kopfschrauben (52, 53) aufweist, die formschlüssig in dem Parallelführungsglied (34) gehalten sind und mit ihrem Gewindeschaft durch zugehörige Langlöcher (56, 57) in der jeweiligen Stützeinrichtung (9, 11) hindurchführen, und daß auf das aus der Stützeinrichtung herausratende freie Ende des Gewindeschaftes Gewindemuttern (47) aufgeschraubt sind.

13. Bearbeitungstisch nach Anspruch 10, dadurch gekennzeichnet, daß die Parallelführungsflächen (49, 51) jeder Stützeinrichtung (9, 11) begrenzt nachgiebig ausgebildet sind, derart, daß ein Passungsspiel zwischen den Parallelführungsflächen (37, 38, 49, 51) der Stützeinrichtung (9, 11) und des Parallelführungsgliedes (34) beim Anziehen der Klemmeinrichtung (52, 53, 47) ausgleichbar ist.

14. Bearbeitungstisch nach Anspruch 10, dadurch gekennzeichnet, daß jede Stützeinrichtung (9, 11) als Blechformteil ausgebildet ist, das eine etwa rechteckige Grundplatte (48) aufweist, an der an zwei zueinander parallelen Seiten die Parallelführungsflächen bildende Flansche (49, 51) angeformt sind, die in einer zu der Grundplatte (48) parallelen Richtung zueinander parallel und in einer auf der Grundplatte (48) senkrecht stehenden Richtung von dieser ausgehend divergiert.

15. Bearbeitungstisch nach Anspruch 14, dadurch gekennzeichnet, daß bei einer der Stützeinrichtungen (9) oberhalb der Flansche (49, 51) zwei Fortsätze (58, 59) angeformt sind, die sich in die entgegengesetzte Richtung wie die Flansche (49, 51) erstrecken und die den mit der Stützeinrichtung (9) verbundenen Teil des Scharnieres (58, 59, 62) bilden.

16. Bearbeitungstisch nach Anspruch 14, dadurch gekennzeichnet, daß oberhalb der Flansche (49, 51) an der Grundplatte (48) ein Flansch (75) angeformt ist, der parallel zu der Tischfläche verläuft und eine Anlagefläche für die Führungsschiene (8) bildet.

17. Bearbeitungstisch nach Anspruch 1, dadurch gekennzeichnet, daß dem Scharnier (58, 59, 62) Befestigungsmittel (71, 74) zugeordnet sind, durch die die Führungsschiene (8) mit dem Scharnier (58, 59, 62) zu verbinden ist.

18. Bearbeitungstisch nach Anspruch 17, dadurch gekennzeichnet, daß die Führungsschiene (8) mit dem Scharnier (58, 59, 62) starr verbindbar ist.

19. Bearbeitungstisch nach Anspruch 17, dadurch gekennzeichnet, daß die Führungsschiene (8) mit dem Scharnier (58, 59, 62) schwenkbar verbunden ist, und daß diese Schwenkachse (74) rechtwinklig zu der Schwenkachse (67) verläuft.

20. Bearbeitungstisch nach Anspruch 17, dadurch gekennzeichnet, daß die Führungsschiene (8) in der Unterseite (68) eine in Richtung auf die Unterseite (68) offene T-Nut (69) aufweist, die sich über die gesamte Länge der Führungsschiene (8) erstreckt und in die das Befestigungsmittel (71, 74) zum Verbinden der Führungsschiene (8) mit dem Scharnier (58, 59, 62) eingreift.

21. Bearbeitungstisch nach Anspruch 20, dadurch gekennzeichnet, daß die mit der Führungsschiene (8) nicht fest verbundene Stützeinrichtung (11) eine mit der T-Nut (69) der Führungsschiene (8) zusammenwirkende Indexeinrichtung (75a) aufweist.

22. Bearbeitungstisch nach Anspruch 1, dadurch gekennzeichnet, daß die Tischplatte (6) einen Rahmen (17) aufweist, der die Seitenflächen (24) bildet und in den eine die Tischfläche (6) bildende Platte (18) vorzugsweise aus Holz, Holzwerkstoff oder Kunststoff eingelegt ist, wobei die Tischfläche (6) mit Abstand über die Oberseite (23) des Rahmens (17) verläuft.

23 Bearbeitungstisch nach Anspruch 22, dadurch gekennzeichnet, daß der Rahmen (17) aus im Querschnitt etwa rechteckigen Profilstäben (19) gebildet ist.

24. Bearbeitungstisch nach Anspruch 1, dadurch gekennzeichnet, daß in wenigstens einer Seitenfläche (24), vorzugsweise in allen Seitenflächen (24), eine T-Nut (31) ausgebildet ist, die parallel zu dem Umfang der Tischfläche (6) verläuft.

25. Bearbeitungstisch nach Anspruch 22 und 24, dadurch gekennzeichnet, daß die T-Nut (31) in dem Rahmen (17) ausgebildet ist.

26. Bearbeitungstisch nach Anspruch 22, dadurch gekennzeichnet, daß der Rahmen (17) in seiner gegenüber der Tischfläche (6) zurückspringenden Oberseite (23) eine nach oben offene, vorzugsweise längs dem Umfang der Tischfläche (6) verlaufende T-Nut (28) enthält.

27. Bearbeitungstisch nach Anspruch 22, dadurch gekennzeichnet, daß der Rahmen (17) an seiner Innenseite (22) eine vorzugsweise durchgehende Rippe (26) aufweist, auf der die die Tischfläche (6) bildende Platte (18) aufgelegt ist.

28. Bearbeitungstisch nach Anspruch 10 und 24, dadurch gekennzeichnet, daß das Parallelführungsglied (34) ein Führungsglied (39) trägt, das in die in der Seitenfläche (24) der Tischplatte (6) ausgebildete T-Nut (31) eingreift.

29. Bearbeitungstisch nach Anspruch 7, dadurch gekennzeichnet, daß der Winkelanschlag (15) ein an der Tischplatte (6) zu halterndes Unterteil (76) sowie ein auf dem Unterteil (76) verschwenkbares und an dem Unterteil (76) mit Klemmitteln (87, 99) arretierbares Oberteil (77) aufweist, das die Anschlagfläche (95) trägt und gegenüber dem Unterteil (76) um die zu der Tischfläche (7) senkrechte Schwenkachse (86) verschwenkbar ist.

30. Bearbeitungstisch nach Anspruch 29, dadurch gekennzeichnet, daß das Unterteil (78) einen Flansch (88) aufweist, mit dem es an der Tischplatte (6) zu haltern ist.

31. Bearbeitungstisch nach Anspruch 29, dadurch gekennzeichnet, daß das Oberteil (77) einen die Anschlagfläche (95) tragenden geraden Schenkel (94) aufweist, an dessen einem Ende die Schwenkachse (87) angeordnet ist und an dessen anderem Ende ein kreisbogenförmig verlaufender Schenkel (96) angeformt ist, dessen außen liegende Umfangsseite (87) einen Kreisausschnitt darstellt, der zu der Schwenkachse (86) konzentrisch ist.

32. Bearbeitungstisch nach Anspruch 31, dadurch gekennzeichnet, daß die Klemmittel (87, 99) zum Arrietieren des Oberteils (77) auf dem Unterteil (76) von einem an dem Unterteil (76) befestigten Schraubenschaft (87) gebildet sind, das durch ein kreisbogenförmig verlaufendes Langloch (98) hindurchführt, das sich mit konstantem Abstand über einen Zentriwinkel größer als 45° um die Schwenkachse (86) herum erstreckt.

33. Bearbeitungstisch nach Anspruch 29, dadurch gekennzeichnet, daß das Oberteil (77) eine Gradeinteilung (101) und das Unterteil (76) eine mit der Gradeinteilung (101) zusammenwirkende Anzeigemarke (102) trägt.

34. Bearbeitungstisch nach Anspruch 29, dadurch gekennzeichnet, daß zur Justage der Grundeinstellung das Unterteil (76') ein an der Tischplatte (6) zu halterndes Befestigungsstück (141) aufweist, das ge genüber dem Unterteil (76') zumindest begrenzt um eine Achse (142) verstellbar und mittels Klemmmitteln (143, 144) fixierbar ist, und daß die Achse (142) zum Justieren des Winkelanschlages (15) parallel zu dessen Einstellachse (86) verläuft.

35. Bearbeitungstisch nach Anspruch 34, dadurch gekennzeichnet, daß das Haltemittel von einem länglichen T-Nutenstein (141) gebildet ist, der in einer nach oben offenen T-Nut (28) der Tischplatte (6) sitzt und dort mit Hilfe von Klemmitteln (145) verklemmbar ist.

36. Bearbeitungstisch nach Anspruch 1, dadurch gekennzeichnet, daß ein verstellbarer Längsanschlag (16) vorgesehen ist, der einen an der Tischplatte (6) zu befestigenden Halter (103) sowie einen wenigstens eine Anschlagfläche (126, 127) tragenden Stab (123) umfaßt, der längsverschieblich in einer Öffnung (122) des Halters (103) sitzt und mit Hilfe von Klemmitteln (125) in dem Halter (103) verklemmbar ist.

37. Bearbeitungstisch nach Anspruch 36, dadurch gekennzeichnet, daß dem Halter (103) weitere Klemmittel (104, 112) zugeordnet sind, durch die der Halter (103) an der Tischplatte (6) verklemmbar ist, und daß die Öffnung (122) für den Stab (123) so angeordnet ist, daß der Stab (123) über der Tischfläche (7) verläuft.

38. Bearbeitungstisch nach Anspruch 36, dadurch gekennzeichnet, daß der Halter (103) zweiteilig ist und ein an der Außenseite (24) der Tischplatte (6) befestigbares Unterteil (104) sowie ein an dem Unter teil (104) schwenkbar gelagertes Oberteil (105) umfaßt, das die Öffnung (122) für den Stab (123) enthält, und daß die Schwenkachse, auf der das Oberteil (105) gegenüber dem Unterteil (104) verschwenkbar ist, außerhalb der Tischfläche (6) verläuft.

39. Bearbeitungstisch nach Anspruch 38, dadurch gekennzeichnet, daß der Schwenkbereich des Oberteils (105) gegenüber dem Unterteil (104) durch einen Anschlag (128) begrenzt ist.

40. Bearbeitungstisch nach Anspruch 36, dadurch gekennzeichnet, daß dem Stab (123) ein auf diesem frei verschiebbarer und verklemmbarer Reiter (129) zugeordnet ist.

41. Bearbeitungstisch nach Anspruch 36, dadurch gekennzeichnet, daß wenigstens eine seiner Endseiten (126, 127) eine zylinderförmig gekrümmte Anschlagfläche trägt.

42. Bearbeitungstisch nach Anspruch 1, dadurch gekennzeichnet, daß die unbenutzte Tischfläche (7) frei von Nuten ist.

Fig.1

0 283 553

Fig. 2

Fig. 4

75    75 a

11

48

49

56    57    51

Fig. 3

69    14
12    8
72    68
63    71    13
67    62
58    64
74    66
9    61
59
49    56
41    37    36    48
57
42    54    51    47
46    55
44    35    34    39    38
45    52    53

0 283 553

Fig.5

0 283 553

*Fig.6*

Fig. 7

Fig. 8

Fig. 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 347 662 (SPANDL) * Seite 2, Zeilen 32-42 * | 1-5,8-11,17,18,21 | B 23 Q 1/02 B 23 Q 9/00 B 23 Q 3/00 |
| Y | | 13,19,23-26 | |
| A | | 7,20 | |
| | --- | | |
| X | GB-A-2 118 480 (PASCOE) * Seite 3, Zeilen 82-87; Ansprüche 1,10,14 * | 1-4,6,7,10,17,18,36,37,42 | |
| A | | 11 | |
| | --- | | |
| X | GB-A-2 148 180 (NEWJIG) * Insgesamt * | 1-5,8,10,17,18 | |
| A | | 14 | |
| | --- | | |
| Y | US-A-2 789 594 (COLEMAN) * Spalte 3, Zeilen 18-27; Figur 3 * | 13 | |
| A | | 1-6,8-12,17,18 | RECHERCHIERTE SACHGEBIETE (Int. Cl.4) B 23 Q B 25 H |
| | --- | | |
| Y | US-A-2 735 456 (GRIER) * Spalte 2, Zeilen 50-62 * | 19 | |
| A | | 1-4,6,9-11,17 | |
| | --- | | |
| Y | DE-U-8 529 284 (BERTSCHINGER) * Insgesamt * | 23-26 | |

-/-

Der vorliegende Recherchenbericht wurde für alle Patentansprüche erstellt

| Recherchenort | Abschlußdatum der Recherche | Prüfer |
|---|---|---|
| DEN HAAG | 24-05-1988 | DE GUSSEM J.L. |

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | | 22,27, 28,35, 36 | |
| | ----- | | |
| | | | **RECHERCHIERTE SACHGEBIETE (Int. Cl.4)** |

Der vorliegende Recherchenbericht wurde für alle Patentansprüche erstellt

| Recherchenort | Abschlußdatum der Recherche | Prüfer |
|---|---|---|
| DEN HAAG | 24-05-1988 | DE GUSSEM J.L. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
    ......................................................................
& : Mitglied der gleichen Patentfamilie, übereinstimmendes
    Dokument

EPO FORM 1503 03.82 (P0403)